# EUROPEAN PATENT SPECIFICATION

(11) **EP 3 882 416 B1**
(45) Date of publication and mention of the grant of the patent: **01.11.2023**
(21) Application number: 20164146.1
(22) Date of filing: 19.03.2020
(51) Int. Cl.: E04H 12/08

(54) **STEEL STRUCTURE, ESPECIALLY WIND TURBINE AND METHOD FOR INSTALLING A WIND TURBINE**
STAHLSTRUKTUR, INSBESONDERE WINDTURBINE, UND VERFAHREN ZUR INSTALLATION EINER WINDTURBINE
STRUCTURE D'ACIER, EN PARTICULIER UNE ÉOLIENNE ET PROCÉDÉ D'INSTALLATION D'UNE ÉOLIENNE

(43) Date of publication of application: 22.09.2021
(73) Proprietor: Siemens Gamesa Renewable Energy A/S, 7330 Brande (DK)
(72) Inventor: Skjaerbaek, Poul, 6920 Videbaek (DK); Soerensen, Johnny, 6920 Videbæk (DK)
(74) Representative: SGRE-Association

(56) References cited:
- WO-A1-03/083236
- WO-A1-2017/178657
- WO-A2-2019/073060

## Description

The invention relates to a steel structure, especially a wind turbine, comprising at least two structure elements, especially wind turbine elements, each having a conical connection interface, which elements are connected by a slip joint connection by means of their connection interfaces.

An example for a steel structure, beside for example a silo, a chimney or other higher on-shore or off-shore buildings, is a wind turbine. Modern wind turbines comprise several turbine elements, which are, when the wind turbine is erected, attached to each other. One element is the foundation, for example a monopile, another element may be a transition piece attached to the monopile. Yet another element is the tower, which is attached to the foundation respectively the monopile or the transition piece, which tower can be a one-piece tower, or which may comprise several tower segments attached to each other. To the tower finally the nacelle is attached. At least some, preferably all of these major connections between the mentioned elements are slip joint connections, which allow for a quite simple connection of the respective elements. For realizing such a slip joint connection, each element comprises a conical connection interface. When connecting two of these elements, the one element is slipped over the other element, so that the one conical interface engages into the other conical interface, which surrounds the first interface. Such a conical slip joint connection creates a friction-based connection without necessitating any additional connection elements like grouts or bolts respectively flange connections or the like. This connection mechanism allows for cost reductions. Less material and equipment are required and, as the installation time is shorter, less personnel is needed. Examples of wind turbines with elements connected by slip joints are shown in WO 2019/073060 A2, EP 2910686 A2 and EP 3255210 A2. This connection type can be used for on-shore and off-shore wind turbines.

A problem modern wind turbines face are excessive vibrations occurring for several reasons, which vibrations can cause severe fatigue issues and eventually lead to failure of components. These vibrations may result from the wind load resting on the blades and the tower, from the rotation of the blades respectively the rotor, from the wave movement creating varying loads on the foundation and the tower etc. For damping vibrations, it is known to arrange dampers in the top part of the tower and/or in the nacelle. These dampers may be slush dampers as the most cost efficient and low-tech solution. As a more advanced damper type, hydraulic dampers are used, e.g. pendulum-based dampers. These damping arrangements may, however, not provide sufficient damping.

Comparable problems are also given at other steel structures, where at least two elongated structure elements are connected by a slip joint connection.

It is therefore an object of the invention to provide an improved wind turbine.

For solving the problem, the invention proposes a steel structure according to appended claim 1.

According to the invention, the slip joint connection is not only the pure connection of two respective conical interfaced elements, but also the integration area of an elastic damping means. This elastic damping means is arranged right between the adjacent connection interfaces, thus right within the slip joint connection. As the damping means is elastic, it allows for a certain movement of both elements relative to each other. The elements may for example slightly tilt relative to each other, when larger loads rest on the turbine, whereas loads with a higher frequency respectively vibrations are also efficiently damped by the elastic damping means acting as a vibration damper.

As the conical connection interfaces have a respectively large outer respectively inner conical surface resulting in a relatively large conical overlapping area, there is a large area, into which the respective elastic damping means may be integrated.

The invention therefore proposes the simple but extremely efficient integration of a damping means by simply integrating respectively sandwiching it in the slip joint connection respectively between the adjacent conical connection interfaces. The damping means acts as a stabilization, which changes critical eigenfrequencies and dampens vibrations of the steel structure, preferably the wind turbine structure. The damping properties are adapted to the vibration respectively frequencies occurring during the operation of the structure, especially the turbine.

The damping means itself is made of or comprises any suitable elastic material, preferable a polymer material, especially a thermoplastic or elastomeric polymer material, like polyurethane, rubber polyethylene, polyamide or the like, which listing is certainly not restricting, as any suitable elastic material having long-lasting properties and a very good wear resistance as well as the needed damping properties may be used.

Regarding the makeup of the damping means itself, several alternatives are possible. According to a first embodiment, the damping means extends around the circumference of the connection interface. The damping means therefore extends around 360°, i.e. around the whole circular conical slip joint connection. The two connection interfaces are therefore connected over the whole circumference via the damping means.

For realizing such a circumferential arrangement, the damping means itself may be a conical ring-shaped damping means. This one-piece ring-shaped damping means may easily be attached to one of the conical interfaces, preferably to the inner interface which engages into the outer interface. The one-piece ring-shaped conical damping means can easily be slipped over the conical interface resting on it, whereupon the other conical interface respectively the second element is slipped over the first conical interface respectively the first element.

In an alternative to using a one-piece ring-shaped conical damping means, the damping means extending around the surface may be made of two or more section elements arranged in a ring form. For example, two section elements each extending around 180°, three section elements each extending around 120° or four section elements each extending around 90° may be used. They may be attached to the conical interface of the first element for example by using a glue or the like, whereupon, after they are arranged in a ring form, the second element is slipped over the first connection interface, respectively the damping means, with its conical connection interface. Also, the installation of this multi-piece damping means is very simple, as also the respective section elements may be pre-fabricated in their shape, so that their attachment can simply be performed on site.

In an alternative embodiment to the previously described damping means extending around the circumference, an inventive steel structure respectively wind turbine may also be characterized in that the damping means comprises two or more damping elements arranged equidistant around the circumference of the connection interface. In this embodiment the separate damping elements are spaced from each other, seen in a circumferential direction. For example, four connection elements each extending around 60° may be used, with a space extending around 30° between two adjacent damping elements. They are preferably spaced evenly around the circumference to provide optimal damping regardless of the direction the two elements may move relative to each other in order to cover any loads coming from any direction.

As already mentioned, the two conical connection interfaces overlap each other, seen in the direction of the slip movement, when attaching them over a certain length, creating a conical connection or interface area. It is preferable, that the damping means, no matter how it is set up, extends at least over half of the length of this overlapping area along which the connection interfaces overlap. Preferably, the damping means extends over at least two third of this overlapping area length, or even more. This ensures that the respective elements have enough freedom to move relative to each other without abutting at each other.

The damping means itself is according to the invention made of one or more mats comprising at least one layer of an elastic material. The damping means respectively the section elements or the damping elements are therefore flat elements or pieces in the form of a mat. The term "mat" comprises any kind of a larger, flat item, which may be made of solid or bulk material, but which may also be made of a woven or knitted or foamed material. The elastic material may be provided as a single layer, which is advantageous especially when a solid or bulk material is used, but it may also be a multi-layer arrangement comprising several layers of the elastic material stacked upon each other, for example when the respective layers are made of woven or knitted material etc. Also, the above-given examples are not restricting the various types of "mats" or mat configurations.

According to the invention, the or each mat comprises one elastic layer sandwiched between two flexible outer layers of another material. According to this arrangement, an elastic layer (which may be a one-layer or a multi-layer elastic layer) is sandwiched between two outer layers of another material. This allows for adapting the properties of the damping mat by specific outer layers having specific properties, especially a low friction coefficient, which friction coefficient is lower than the friction coefficient of the elastic layer. As the outer layers come into contact with the connection interfaces, it is advantageous to provide outer layers having a very low friction coefficient respectively having very good sliding properties, so that it is possible to easily slip the one element over the other without having too much slip resistance. The outer materials also preferably have very smooth outer surfaces, with this low roughness being also positive for a very easy slip connection. The material of the mat may be designed for various damping degrees. It may have an adjustable damping degree, which can e.g. be controlled from harder to softer by a controller e.g. of the wind turbine.

These outer layers, which are preferably flexible, may for example be made of another polymer, preferably a thermoplastic polymer, or for example of glass fiber mats being woven or knitted, which fibers are embedded into a binder or resin matrix. The stiffness properties of these outer layers are chosen in view of the necessary overall elastic properties of the elastic damping means, so that these preferably flexible outer layers do not negatively influence the elastic properties of the sandwiched intermediate layer respectively the overall needed elasticity.

As already mentioned, the damping means is integrated between the adjacent conical connection interfaces and takes respective loads or vibrations etc. for damping the same. As in this overlapping area the damping means is integrated as an additional item, on which mechanical forces rest or act, the damping means can also be used as a carrier for integrating an additional sensor means in this overlapping area in order to evaluate sensor information which may be useful for any other control purpose. For addressing this issue, the invention further proposes, that at least one sensor element communicating with at least one control device of the steel structure, especially the wind turbine is arranged at the damping means. This sensor element, which is integrated right in the area where the necessary loads or forces occur, allows for live monitoring the forces, loads, vibrations etc. being present in this area. As it communicates with at least one control device of the structure respectively the wind turbine, this sensor information may be used as a basis for any control purpose to control the system for an optimized regulation e.g. of the wind turbine and to structure or counteract the loads. It may for example be used to control the pitch of the blades or to activate any aerodynamic features mounted on the blades like flaps, spoilers or the like. It may certainly also be used for other control purposes, especially for controlling any relevant operational parameters of the turbine which may have any effect on the load structuring especially load distribution etc. It may also be used for long term monitoring of the load distribution respectively the load cycle in order to determine any necessary maintenance work or the like.

The invention also relates to a method according to appended claim 12 for installing an on-shore or off-shore wind turbine.

According to an embodiment of the method, a conical ring-shaped damping means or a damping means comprising two or more section elements to be arranged in a ring form is used. This damping means extends around the circumference of the adjacent conical connection interfaces.

In an alternative, a damping means comprising two or more damping elements to be arranged equidistant around the circumference of the connection interfaces is used. According to this embodiment, the damping elements do not build a ring form, but are locally distributed around the circumference.

However the respective damping means is set up, the damping means respectively the section elements respectively the damping elements extend preferably along at least half of the length of the overlapping area along which the connection interfaces overlap. Preferably, they extend over at least two thirds of the length or over the whole length of the area.

In another embodiment of the inventive method flexible outer layers are used, preferably having a lower friction coefficient than the elastic material.

Finally, according to the inventive method, a damping means comprising one or more, preferably evenly distributed, sensor elements for communicating with at least one control device of the wind turbine is used.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle sketch of an inventive wind turbine with two integrated damping means,
- Fig. 2: an enlarged view of the upper part of the wind turbine of Fig. 1,
- Fig. 3: an enlarged view of the connection zone comprising an integrated damping means,
- Fig. 4: an exploded principle sketch of two tower elements with conical connection interfaces and a ring-shaped conical damping means,
- Fig. 5: the elements of fig. 4 in a perspective and exploded view,
- Fig. 6: a longitudinal sectional view of the slip joint connection of the elements of fig. 5,
- Fig. 7: a sketch according to fig. 3 with the two elements being tilted towards each other,
- Fig. 8: a principal partial view of a multi-layer damping means and
- Fig. 9: an exploded principle sketch of a multi-part elastic damping element 20.

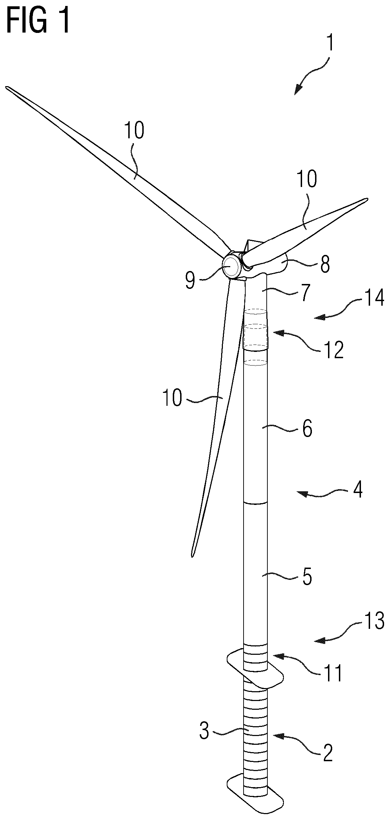

Fig. 1 shows a principle sketch of the inventive steel structure in form of a wind turbine 1, comprising a foundation element 2 here in form of a monopile 3, which foundation element 2 may alternatively also be a tripod, a suction bucket or a gravity foundation.

The wind turbine 1 further comprises a tower 4 comprising two tower segments 5, 6 attached to each other. The tower 4 further comprises a tower adapter 7, which is attached to the upper tower element 6, to which adapter 7 a nacelle 8 comprising a rotor 9 with respective blades 10 is attached.

In the embodiment shown in fig. 1, two damping zones 11, 12 are realized. The first damping zone 11 is realized between the foundation element 2 and the lower tower element 5. The second damping zone 12 is realized between the upper tower element 6 in the tower adapter 7. In the respective damping zone 11, 12 the foundation element 2 and the tower element 5 respectively the tower element 6 and the tower adapter 7 are connected by respective slip joint connections 13, 14. For realizing these slip joint connections 13, 14, the foundation element 2 and the tower element 5 respectively the tower element 6 and the tower adapter 7 have respective conical connection interfaces, with the one conical interface being slipped over the other conical interface. Thus, each damping zone 11, 12 comprises a slip joint connection 13, 14, which will be explained in detail below.

As both slip joint connections 13, 14 are basically comparable to each other, the following figures show the upper slip joint connection 14 respectively the damping zone 12 in detail. Although the figures show a wind turbine as an example for a steel structure, the inventive way of connecting two elongated steel elements by an inventive slip joint may also be applied to any other steel structure, where two elongated elements are connected.

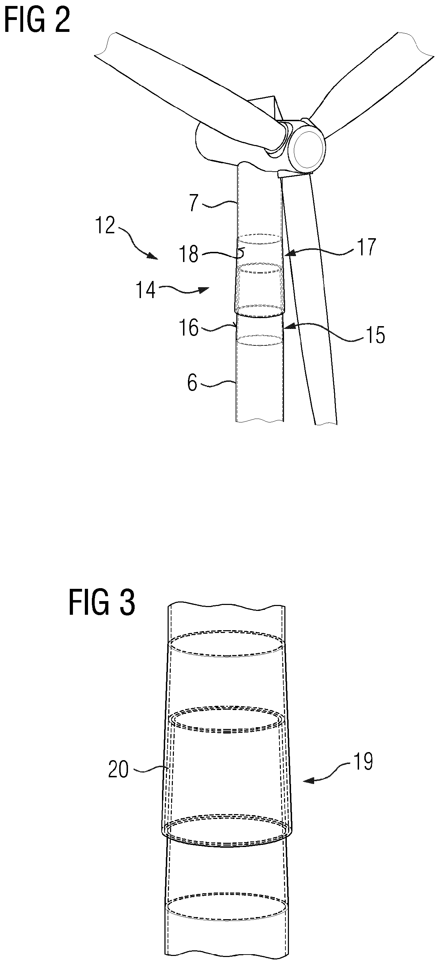

Figs. 2 and 3 show the upper end of the tower element 6 and the tower adapter 7. The upper end of the tower element 6 comprises a conical part 15 having an outer conical connection interface 16. The diameter of this conical connection interface 16 is reduced to the upper end of the tower element 6.

Also, the tower adapter 7 comprises a conical part 17 at its lower end, with a conical connection interface 18 at its inner circumference. The conical part 17 is slipped over the conical part 15, so that the conical connection interface 18 surrounds and overlaps the conical connection interface 16 over a certain length, seen in the lengthwise direction of the tower 4.

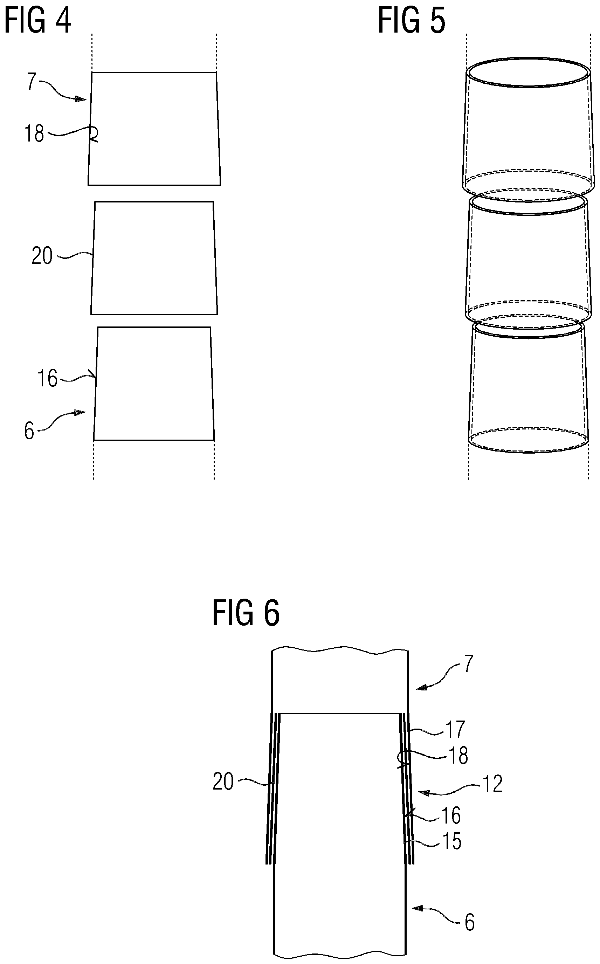

As fig. 3 shows, in this overlapping area between the two conical connection interfaces 16, 18 a damping means 19 in the form of a conical ring-shaped damping element 20 is arranged respectively sandwiched. This ring-shaped damping element or damping means is a one-piece damping means, as is shown in figs. 4 and 5 in respective exploded views.

This elastic damping element 20 is for example a one-layer damping element made of a mat, either being a solid or bulk material mat or comprising several layers of for example knitted or woven material. However, this mat-like ring-shaped damping element 20 is set up, it has respective elastic properties allowing for damping any loads or vibrations or the like and even allowing for a certain movement of the respective elements to each other, i.e. a movement of the tower adapter 7 relative to the tower element 6, as will be explained below.

When installing the wind turbine, the one-piece conical damping element 20 is slipped over the conical connection interface 16 until a tight form fit is realized. The tower element 6 is already installed respectively either fixed to the tower element 6 or the whole tower 4 is as a one-piece tower already fixed to the foundation element 2 via a respective slip joint which is comparably the same as depicted in figs. 2-5.

After having slipped the damping element 20 over the conical connection interface 16, the tower adapter 7 is slipped with its conical part 17 over the conical part 15 of the tower element 6, which means that the conical inner connection interface 18 is slipped over the conical damping element 20 form fitted to the conical connection interface 16, thereby sandwiching the damping means 20 between the conical connection interfaces 16 and 18. After having lowered the tower adapter 7 onto the tower element 6, the elastic damping means is form fit and tightly fixed between the conical connection interfaces 16, 18 and thus sandwiched in the slip joint connection 12.

Fig. 6 shows a longitudinal sectional view through this slip joint connection 12 between the tower element 6 and the tower adapter 7. As can be clearly seen, the conical part 15 engages into the conical part 17, which widens to its lower end, so that a form fit engagement is possible. Between the respective conical connection interfaces 16 and 18 the one-piece conical elastic damping element 20 is sandwiched.

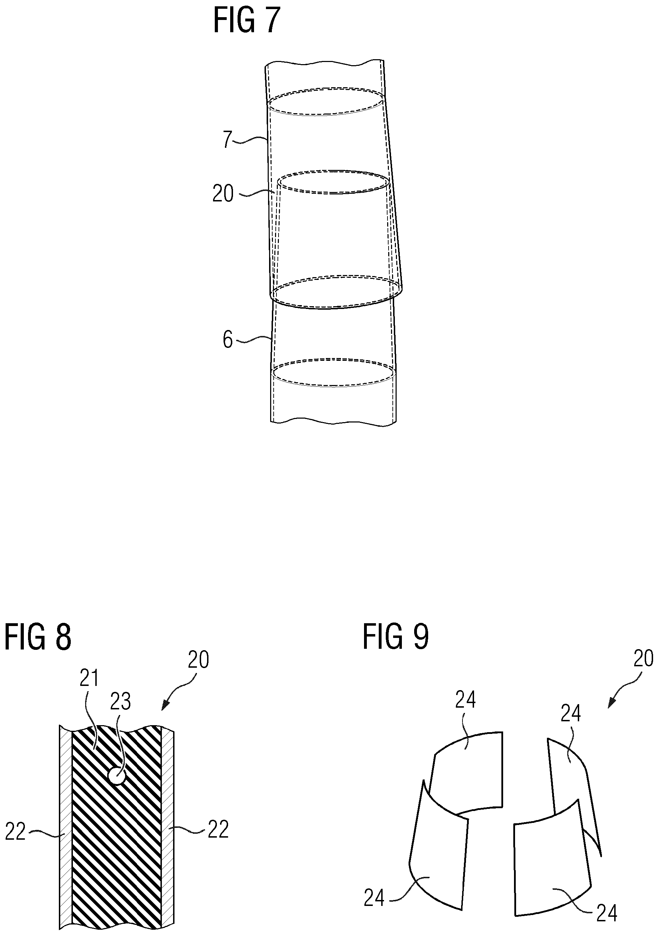

As the damping element 20 is elastic, and as it has a certain thickness, it allows for a certain movement of the elements which are slip joined by the slip joint connection 12. This movement may for example be a tilting movement, as, clearly exaggerated, shown in fig. 7, where the tower adapter 7, which after completely installing the wind turbine, carries the nacelle 8 with the rotor 9 and the blades 10, is slightly tilted to the left relative to the vertically arranged tower 4 respectively the tower element 6. This is possible, as the elastic damping means 20 may be deformed due to any tilting loads resting on the slip joint connection 12, which is somehow elastic due to the integration of the elastic damping means 20.

It is clear that this tilting may occur in any direction, although it is only shown in one direction in fig. 7, certainly depending on the direction of the tilting load resting on this slip joint connection 12.

The elastic damping means 19 respectively the damping element 20 does not only provide a possibility for moving the elements relative to each other, but also dampens any vibrations. Thus, these vibrations do not negatively influence the durability of the wind turbine respectively of any of its components, as they may be dampened respectively absorbed by the elastic camping means 19.

Although the figs. 2-7 show the slip joint connection 14, the same setup is realized at the slip joint connection 13, and may be realized at any other conical slip joint connection, which may be realized at the wind turbine 1. If for example the tower consists of more than two tower segments, which are stacked one above the other when installing the wind turbine, it is certainly possible to also provide the respective conical slip joint connections between some or all of these tower elements and to sandwich or integrate an elastic damping means like the one described in the respective slip joint connections.

The elastic damping means 19 respectively the elastic damping element 20 is built from a mat, which is cut and worked into the respective ring form. Preferably, this mat is a bulk material mat and thus comprises only one elastic material layer, which layer may for example be of elastic polyurethane, polyethylene, polyamide or any suitable polymer having the needed elastic properties. But it may also consist of two or more separate layers of the elastic material, which layers may for example be knitted or woven layers of the respective elastic material or the like. No matter how the elastic damping means 19 is set up, the respective mat is cut into shape and is for example welded along its longitudinal edges to build the conical ring form.

As fig. 8 shows, an elastic damping means 19 which is a multi-layer damping element 20 is used. It comprises a central elastic layer 21, which is made of elastic material as mentioned above, and which may be a single layer or a multi-layer elastic layer as depicted above. This intermediate elastic layer 21 is sandwiched between two outer layers 22, which are made of another material and which may be single layers or also multi-layers. However these outer layers 22 are set up, they preferably provide other mechanical or physical properties as the elastic layer 21. Most preferably, these outer layers 22 have a lower friction coefficient than the elastic material of the elastic layer 22. This allows for very good sliding or slipping properties, so that the sliding or slipping of the conical connection interface, either the one which engages into the conical damping means 20 or the one which is slipped on the outside of the conical damping means 19, is easily performed without any notable higher slip resistance. This ascertains, when the two elements are slip joined, that the elastic damping means 22 stays in place and is not moved.

As fig. 8 shows, at least one sensor element 23 is arranged at the elastic damping means 19, respectively the damping element 20 which sensor element 23 allows for gathering any sensor information respectively measuring data which provide any information about the load resting on the damping means respectively the slip joint connection, or the amount or frequency of any vibrations being applied to the damping means 19 or the like. This sensor element 23 communicates with at least one control device of the wind turbine, which is adapted to control at least one component of the wind turbine based on this sensor information. It is possible that the control device for example controls the pitch of the blades, when for example a high load is measured by the sensor element, in order to lower the load by adapting the position of the blades respectively their pitch. It is certainly possible to also control other components of the wind turbine, which may have any influence on the respective load or load distribution.

Finally, fig. 9 shows another example of a damping means 19, which comprises four section or damping elements 24, which each section or damping element 24 also being realized by a respective mat, which may be a mat as shown in fig. 8.

The respective section or damping elements 24 are fixed to the respective conical connection interface during the installation, for example by gluing them to the connection interface. If the elements 24 are section elements, each section element extends around 90°, so that, when all four are attached to the connection interface, they build a conical ring form and extend around the entire circumference of both connection interfaces after the slip joint is realized. If the elements are damping elements 24, they may for example only extend around 60°, so that, when fixed or glued to the conical connection interface, a space or distance of 30° is realized between two adjacent damping elements 24. Thus, they do not build a ring form, but are arranged with space to each other. Also, this arrangement allows for a movement of the respective elements relative to each other and for absorbing any vibrations or loads etc.

Certainly, also one or all of these section or damping elements 24 may be provided with a respective sensor element 23. If more than one sensor element 23 is used, either at the conical one-piece ring-shaped damping means 19, or at the multi-piece damping means 19, the several sensor elements are preferably evenly distributed around the circumference or the height of the respective damping means 19.

Although the present invention has been described in detail with reference to the preferred embodiment, the present invention is not limited by the disclosed examples from which the skilled person is able to derive other variations without departing from the scope of the invention as defined by the appended claims.

## Claims

1. Steel structure, especially wind turbine, comprising at least two structure elements, especially turbine elements (2, 5, 6, 7), each having a conical connection interface (16, 18), which elements are connected by a slip joint connection (14) by means of their connection interfaces (16, 18), wherein an elastic damping means (19) is arranged between the adjacent connection interfaces (16, 18), wherein the damping means (19) is made of one or more mats comprising at least one layer of an elastic material, **characterised in that** the or each mat comprises one elastic layer (21) sandwiched between two outer layers (22) of another material.

2. Steel structure according to claim 1, **characterised in that** the damping means (19) extends around the circumference of the connection interfaces (16, 18).

3. Steel structure according to claim 2, **characterised in that** the damping means (19) is a conical ring-shaped damping means.

4. Steel structure according to claim 2, **characterised in that** the damping means (19) comprises two or more section elements (24) arranged in a ring form.

5. Steel structure according to claim 1, **characterised in that** the damping means (19) comprises two or more damping elements (24) arranged equidistant around the circumference of the connection interfaces (16, 18).

6. Steel structure according to one of the claims 2 to 5, **characterised in that** the damping means (19), the section elements (24) or the damping elements (24) extend along at least half of the length of the overlapping area along which the connection interfaces (16, 18) overlap.

7. Steel structure according to one of the preceding claims, **characterised in that** the outer layers (22) are flexible.

8. Steel structure according to one of the preceding claims, **characterised in that** the outer layers (22) material has a lower friction coefficient than the elastic material.

9. Steel structure according to one of the preceding claims, **characterised in that** at least one sensor (23) element suitable for communicating with at least one control device of the steel structure, especially the wind turbine (1), is arranged at the damping means (19).

10. Steel structure according to claim 9, **characterised in that** several evenly distributed sensor elements (23) are arranged at the damping means (19).

11. Steel structure according one of the preceding claims, **characterised in that** it is a wind turbine with a tower and a nacelle, and that the connection surfaces (16, 18) are arranged at a foundation element (2) and a tower element (5), at two tower elements (5, 6, 7) or at a tower element (7) and a nacelle (8) arranged at the tower (4).

12. Method for installing an on-shore or off-shore wind turbine, comprising several elements to be connected, i.e. a foundation element (2), a tower (4) comprising one or more tower elements (5, 6, 7) and a nacelle (8), wherein the foundation element (2) and the tower element (5) to be fixed to it, and/or two tower elements (5, 6, 7) to be connected and/or the tower element (7) and the nacelle (8) to be fixed to it comprise conical connection interfaces (16, 18) for a slip joint connection (13, 14), wherein an elastic damping means (19) is arranged at the conical connection interface (16) of one of the elements to be connected, whereupon the elements are slip connected with their connection interfaces (16, 18) with the damping means (19) arranged between the adjacent conical connection interfaces (16, 18), wherein the damping means (19) is made of one or more mats comprising at least one elastic layer of an elastic material, **characterized in that** the or each mat comprises one elastic layer (21) sandwiched between two outer layers (22) of another material.

13. Method according to claim 12, **characterised in that** a conical ring shaped damping means (19) or a damping means (19) comprising two or more section elements (24) to be arranged in a ring form is used, or that a damping means (19) comprising two or more damping elements (24) to be arranged equidistant around the circumference of the connection interfaces (16, 18) is used, wherein preferably the damping means (19), the section elements (24) or the damping elements (24) extend along at least half of the length of the overlapping area along which the connection interfaces (16, 18) overlap.

14. Method according to claim 12 or 13, **characterised in that** flexible outer layers (22) are used.

15. Method according to one of the claims 12 to 14, **characterised in that** the material of the outer layers (22) has a lower friction coefficient than the elastic material.

16. Method according to one of the claims 13 to 15, **characterised in that** a damping means (19) comprising one or more, preferably evenly distributed, sensor elements (23) for communicating with at least one control device of the wind turbine (1) is used.

## Patentansprüche

1. Stahlstruktur, insbesondere Windkraftanlage, umfassend mindestens zwei Strukturelemente, insbesondere Turbinenelemente (2, 5, 6, 7), die jeweils eine konische Verbindungsschnittstelle (16, 18) aufweisen, wobei die Elemente über eine Steckverbindung (14) mittels ihrer Verbindungsschnittstellen (16, 18) verbunden sind, wobei eine elastische Dämpfungseinrichtung (19) zwischen den angrenzenden Verbindungsschnittstellen (16, 18) angeordnet ist, wobei die Dämpfungseinrichtung (19) aus einer oder mehreren Matten besteht, die mindestens eine Lage aus einem elastischen Material umfassen, **dadurch gekennzeichnet, dass** die oder jede Matte eine elastische Lage (21) umfasst, die zwischen zwei Außenlagen (22) eines anderen Materials angeordnet ist.

2. Stahlstruktur nach Anspruch 1, **dadurch gekennzeichnet, dass** sich die Dämpfungseinrichtung (19) um den Umfang der Verbindungsschnittstellen (16, 18) erstreckt.

3. Stahlstruktur nach Anspruch 2, **dadurch gekennzeichnet, dass** die Dämpfungseinrichtung (19) eine konische, ringförmige Dämpfungseinrichtung ist.

4. Stahlstruktur nach Anspruch 2, **dadurch gekennzeichnet, dass** die Dämpfungseinrichtung (19) zwei oder mehrere Abschnittselemente (24) umfasst, die ringförmig angeordnet sind.

5. Stahlstruktur nach Anspruch 1, **dadurch gekennzeichnet, dass** die Dämpfungseinrichtung (19) zwei oder mehrere Dämpfungselemente (24) umfasst, die in gleichen Abständen um den Umfang der Verbindungsschnittstellen (16, 18) angeordnet sind.

6. Stahlstruktur nach einem der Ansprüche 2 bis 5, **dadurch gekennzeichnet, dass** sich die Dämpfungseinrichtung (19), die Abschnittselemente (24) oder die Dämpfungselemente (24) entlang zumindest der Hälfte der Länge der überlagernden Fläche, entlang derer sich die Verbindungsschnittstellen (16, 18) überlagern, erstrecken.

7. Stahlstruktur nach einem der vorstehenden Ansprüche, **dadurch gekennzeichnet, dass** die Außenlagen (22) flexibel sind.

8. Stahlstruktur nach einem der vorstehenden Ansprüche, **dadurch gekennzeichnet, dass** das Material der Außenlagen (22) einen niedrigeren Reibungskoeffizienten als das elastische Material aufweist.

9. Stahlstruktur nach einem der vorstehenden Ansprüche, **dadurch gekennzeichnet, dass** mindestens ein Sensorelement (23), das zur Kommunikation mit mindestens einer Steuerungsvorrichtung der Stahlstruktur, insbesondere der Windkraftanlage (1), geeignet ist, an der Dämpfungseinrichtung (19) angeordnet ist.

10. Stahlstruktur nach Anspruch 9, **dadurch gekennzeichnet, dass** mehrere gleichmäßig verteilte Sensorelemente (23) an der Dämpfungseinrichtung (19) angeordnet sind.

11. Stahlstruktur nach einem der vorstehenden Ansprüche, **dadurch gekennzeichnet, dass** es sich um eine Windkraftanlage mit einem Turm und einer Gondel handelt und dass die Verbindungsschnittstellen (16, 18) an einem Fundamentelement (2) und einem Turmelement (5), an zwei Turmelementen (5, 6, 7) oder an einem Turmelement (7) und einer am Turm (4) angeordneten Gondel (8) angeordnet sind.

12. Verfahren zur Installation einer Onshore- oder Offshore-Windkraftanlage, umfassend mehrere zu verbindende Elemente, d. h. ein Fundamentelement (2), einen Turm (4), umfassend ein oder mehrere Turmelemente (5, 6, 7) und eine Gondel (8), wobei das Fundamentelement (2) und das daran zu fixierende Turmelement (5) und/oder zwei zu verbindende Turmelemente (5, 6, 7) und/oder das Turmelement (7) und die daran zu fixierende Gondel (8) konische Verbindungsschnittstellen (16, 18) für eine Steckverbindung (13, 14) umfassen, wobei eine elastische Dämpfungseinrichtung (19) an der konischen Verbindungsschnittstelle (16) eines der zu verbindenden Elemente angeordnet ist, wobei die Elemente mit ihren Verbindungsschnittstellen (16, 18) mit den zwischen den angrenzenden konischen Verbindungsschnittstellen (16, 18) angeordneten Dämpfungseinrichtungen (19) zusammengesteckt werden, wobei die Dämpfungseinrichtung (19) aus einer oder mehreren Matten besteht, die mindestens eine Lage aus einem elastischen Material umfasst, **dadurch gekennzeichnet, dass** die oder jede Matte eine elastische Lage (21) umfasst, die zwischen zwei Außenlagen (22) eines anderen Materials angeordnet ist.

13. Verfahren nach Anspruch 12, **dadurch gekennzeichnet, dass** eine konische, ringförmige Dämpfungseinrichtung (19) oder eine zwei oder mehrere ringförmig anzuordnende Abschnittselemente (24) umfassende Dämpfungsvorrichtung (19) verwendet wird oder dass eine zwei oder mehrere Dämpfungselemente (24), die in gleichen Abständen um den Umfang der Verbindungsschnittstellen (16, 18) anzuordnen sind, umfassende Dämpfungseinrichtung (19) verwendet wird, wobei sich vorzugsweise die Dämpfungseinrichtung (19), die Abschnittselemente (24) oder die Dämpfungselemente (24)entlang zumindest der Hälfte der Länge der überlagernden Fläche, entlang derer sich die Verbindungsschnittstellen (16, 18) überlagern, erstrecken.

14. Verfahren nach Anspruch 12 oder 13, **dadurch gekennzeichnet, dass** flexible Außenlagen (22) verwendet werden.

15. Verfahren nach einem der Ansprüche 12 bis 14, **dadurch gekennzeichnet, dass** das Material der Außenlagen (22) einen niedrigeren Reibungskoeffizienten als das elastische Material aufweist.

16. Verfahren nach einem der Ansprüche 13 bis 15, **dadurch gekennzeichnet, dass** eine Dämpfungseinrichtung (19) verwendet wird, die ein oder mehrere, vorzugsweise gleichmäßig verteilte, Sensorelemente (23) zur Kommunikation mit mindestens einer Steuerungsvorrichtung der Windkraftanlage (1) umfasst.

## Revendications

1. Structure en acier, en particulier éolienne, comprenant au moins deux éléments structurels, en particulier des éléments de turbine (2, 5, 6, 7), chacun comportant une interface de raccordement conique (16, 18), lesquels éléments étant raccordés par un assemblage coulissant (14) au moyen de leurs interfaces de raccordement (16, 18), dans laquelle un dispositif d'amortissement élastique (19) est disposé entre les interfaces de raccordement adjacentes (16, 18), le dispositif d'amortissement (19) étant constitué d'une ou plusieurs nattes comprenant au moins une couche d'un matériau élastique, **caractérisée en ce que** la ou chacune des nattes comprend une couche élastique (21) en sandwich entre deux couches externes (22) d'un autre matériau.

2. Structure en acier selon la revendication 1, **caractérisée en ce que** le dispositif d'amortissement (19) s'étend autour de la circonférence des interfaces de raccordement (16, 18) .

3. Structure en acier selon la revendication 2, **caractérisée en ce que** le dispositif d'amortissement (19) est un dispositif d'amortissement annulaire conique.

4. Structure en acier selon la revendication 2, **caractérisée en ce que** le dispositif d'amortissement (19) comprend au moins deux éléments de section (24) disposés en anneau.

5. Structure en acier selon la revendication 1, **caractérisée en ce que** le dispositif d'amortissement (19) comprend au moins deux éléments d'amortissement (24) disposés à équidistance autour de la circonférence des interfaces de raccordement (16, 18).

6. Structure en acier selon l'une des revendications 2 à 5, **caractérisée en ce que** le dispositif d'amortissement (19), les éléments de section (24) ou les éléments d'amortissement (24) s'étendent autour d'au moins la moitié de la zone de superposition le long de laquelle se chevauchent les interfaces de raccordement (16, 18).

7. Structure en acier selon l'une quelconque des revendications précédentes, **caractérisée en ce que** les couches externes (22) sont souples.

8. Structure en acier selon l'une quelconque des revendications précédentes, **caractérisée en ce que** le matériau des couches externes (22) a un coefficient de friction plus faible que le matériau élastique.

9. Procédé selon l'une quelconque des revendications précédentes, **caractérisé en ce qu'**au moins un capteur (23) convenant particulièrement pour communiquer avec au moins un dispositif de commande de la structure en acier, en particulier l'éolienne (1), est disposé au niveau du dispositif d'amortissement (19).

10. Structure en acier selon la revendication 9, **caractérisée en ce que** plusieurs éléments capteurs (23) distribués de façon régulière sont disposés au niveau du dispositif d'amortissement (19).

11. Structure en acier selon l'une quelconque des revendications précédentes, **caractérisée en ce que** c'est une éolienne avec une tour et une nacelle, et **en ce que** les surfaces de raccordement (16, 18) sont disposées au niveau d'un élément de fondation (2) et d'un élément de tour (5), de deux éléments de tour (5, 6, 7) ou d'un élément de tour (7) et d'une nacelle (8) disposée contre la tour (4).

12. Procédé d'installation d'une éolienne à terre ou offshore comprenant plusieurs éléments à raccorder, par exemple un élément de fondation (2), une tour (4) comprenant au moins un élément de tour (5, 6, 7) et une nacelle (8), dans lequel l'élément de fondation (2) et l'élément de tour (5) à y fixer, et/ou deux éléments de tour (5, 6, 7) à raccorder et/ou l'élément de tour (7) et la nacelle (8) à y fixer comprennent des interfaces de raccordement coniques (16, 18) pour assurer un assemblage coulissant (13, 14), un dispositif d'amortissement élastique (19) étant disposé au niveau de l'interface de raccordement conique (16) d'un des éléments à raccorder, après quoi les éléments sont assemblés par coulissement par leurs interfaces de raccordement (16, 18) avec le dispositif d'amortissement (19) disposé entre les interfaces de raccordement coniques adjacentes (16, 18), le dispositif d'amortissement (19) étant constitué d'une ou plusieurs nattes comprenant au moins une couche élastique d'un matériau élastique, **caractérisé en ce que** la ou les nattes comprennent une couche élastique (21) en sandwich entre deux couches externes (22) d'un autre matériau.

13. Procédé selon la revendication 12, **caractérisé en ce qu'**on utilise un dispositif d'amortissement annulaire conique (19) ou un dispositif d'amortissement (19) comprenant au moins deux éléments de section (24) à disposer en une forme annulaire, ou **en ce qu'**on utilise un dispositif d'amortissement (19) comprenant au moins deux éléments d'amortissement (24) à disposer à équidistance autour de la circonférence des interfaces de raccordement (16, 18), où préférentiellement le dispositif d'amortissement (19), les sections d'amortissement (24) ou les éléments d'amortissement (24) s'étendent autour d'au moins la moitié de la zone de superposition le long de laquelle se chevauchent les interfaces de raccordement (16, 18).

14. Procédé selon la revendication 12 ou 13, **caractérisé en ce qu'**on utilise des couches externes souples (22).

15. Procédé selon l'une quelconque des revendications 12 à 14, **caractérisé en ce que** le matériau des couches externes (22) a un coefficient de friction plus faible que le matériau élastique.

16. Procédé selon l'une quelconque des revendications 13 à 15, **caractérisé en ce qu'**on utilise un dispositif d'amortissement (19) comprenant au moins un élément capteur (23) de préférence en distribution régulière pour communiquer avec au moins un dispositif de commande de l'éolienne (1).
